(19) Europäisches Patentamt
European Patent Office
Office européen des brevets

(11) EP 4 563 523 A1

(12) EUROPEAN PATENT APPLICATION

(43) Date of publication:
**04.06.2025 Bulletin 2025/23**

(21) Application number: **23212540.1**

(22) Date of filing: **28.11.2023**

(51) International Patent Classification (IPC):
***C01B 3/04*** *(2006.01)* ***C25B 1/04*** *(2021.01)*
***F01D 15/10*** *(2006.01)* ***C25B 1/042*** *(2021.01)*

(52) Cooperative Patent Classification (CPC):
**C01B 3/047; C25B 1/042;** C01B 2203/0244; C01B 2203/0272; C01B 2203/043; C01B 2203/84

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
- **Jarolin, Kolja**
  **60439 Frankfurt (DE)**
- **Dasgupta, Sayan**
  **60439 Frankfurt (DE)**
- **Schmidt, Sophia**
  **60439 Frankfurt (DE)**
- **Vicari, Lorenzo**
  **60439 Frankfurt am Main (DE)**

(74) Representative: **Air Liquide**
**L'Air Liquide S.A.**
**Direction de la Propriété Intellectuelle**
**75, Quai d'Orsay**
**75321 Paris Cedex 07 (FR)**

# (54) PROCESS FOR THE PRODUCTION OF HYDROGEN FROM AMMONIA

(57) The invention relates to a process (100) for the production of hydrogen from ammonia comprising the following steps:
- providing a water feed stream to a water electrolyzer (101);
- performing a water electrolysis (102) of the water feed stream in the electrolyzer, producing an oxygen product stream and an electrolysis hydrogen stream;
- providing an ammonia feed stream to an ammonia cracking reactor (103);
- providing an oxidant stream (105) and performing a combustion reaction (106) with said oxidant stream, thereby generating heat;
- in the ammonia cracking reactor, performing an endothermic reaction of ammonia cracking (104) of the ammonia feed stream with said generated heat;
characterized in that the oxidant stream comprises at least a portion of the oxygen product stream produced by the water electrolysis of the water feed stream.

[Fig. 1]

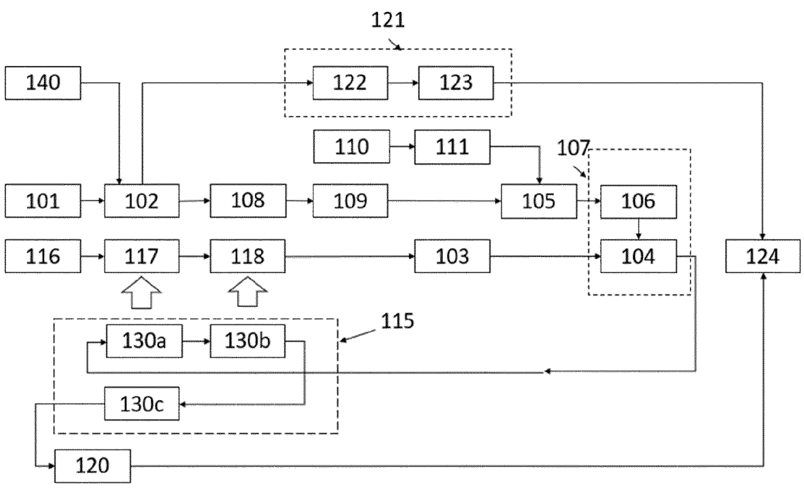




EP 4 563 523 A1

## Description

The field of the present invention is that of a process for producing a cracked gas product comprising hydrogen by an endothermic cracking reaction of an ammonia feed stream. The invention also relates to an apparatus for producing a cracked gas product comprising hydrogen by an endothermic cracking reaction of an ammonia feed stream. The invention also relates to the use of such an apparatus for ammonia cracking.

In the ammonia cracking process gaseous ammonia is dissociated into a mixture of hydrogen and nitrogen in the reversible reaction:

$$2\ NH3 \rightleftharpoons N2 + 3\ H2$$

The reaction is endothermic, requiring heat for maintaining the ammonia cracking reaction. Heat can be obtained by a combustion reaction.

It has been found that heat produced in exothermic non-catalytic oxidation of ammonia by the following reaction

$$2\ NH3 + 3/2\ 02 \rightarrow N2 + 3\ H20$$

may be sufficient to provide the necessary heat when subsequently performing the endothermic catalytic cracking of ammonia.

The combination of the exothermic reaction with the endothermic cracking reaction is called autothermal cracking. Autothermal cracking allows CO2 free production of a hydrogen product in the sense that the process does not generate any CO2.

A plant which is cracking ammonia to hydrogen needs to be highly efficient, since the scheme will mainly be applied in areas with scarcity of renewable energy. Current known solutions are focusing only on the cracking step and are not considering the integration of the waste heat, which is crucial for the efficiency.

An aim of the present invention is to overcome these problems and to use a water-electrolysis to produce the oxidant needed for a combustion reaction to provide heat to the cracking reaction.

The hydrogen produced from the electrolyzer can be added to the hydrogen produced from ammonia cracking, increasing the efficiency of the overall plant.

Advantageously, it is possible to keep the hydrogen produced from ammonia cracking and the hydrogen produced by the electrolysis as two separated hydrogen gas products with two different purity grades. The hydrogen produced by the electrolysis is advantageously readily available during a startup phase of the plant, during which the hydrogen produced from ammonia cracking is at least not fully available.

The electricity needed for the electrolysis can be at least partially produced from a steam turbine utilizing the waste heat from the ammonia cracking process.

Besides, the produced steam could also be used for high-temperature electrolysis to reduce the electricity demand. Furthermore, electricity could also be exported. By adding a fired heater which is partially run by the Ammonia, Hydrogen and/or Tail gasses, additional steam or electricity can be produced to decrease the total electricity imported or even have a net positive production.

The invention relates to a process for the production of hydrogen from ammonia comprising the following steps:

- providing a water feed stream to a water electrolyzer;
- performing a water electrolysis of the water feed stream in the electrolyzer, producing an oxygen product stream and an electrolysis hydrogen stream;
- providing an ammonia feed stream to an ammonia cracking reactor;
- providing an oxidant stream and performing a combustion reaction with said oxidant stream, thereby generating heat;
- in the ammonia cracking reactor, performing an endothermic reaction of ammonia cracking of the ammonia feed stream with said generated heat;

characterized in that the oxidant stream comprises at least a portion of the oxygen product stream produced by the water electrolysis of the water feed stream.

The invention may comprise at least one of the following features, taken independently or in combination:

The reaction of ammonia cracking is part of an autothermal reaction of ammonia cracking. In particular, the reaction of ammonia cracking and the combustion reaction are performed in the same reactor vessel.

The oxidant stream is provided at a pressure of up to 30 bar, preferably up to 10 bar or is provided substantially at atmospheric pressure.

The oxidant stream comprises substantially pure oxygen. This enables a more energy efficient process and to

downsize the ammonia cracking reactor, as less inert gas is provided to the combustion reaction.

In particular, the combustion reaction is performed inside the ammonia cracking reactor.

In one embodiment, said combustion reaction comprises an exothermic reaction of partial oxidation of ammonia consuming part of the ammonia feed stream and the oxidant stream, thereby producing nitrogen, water and said heat generated by the combustion reaction and said endothermic reaction of ammonia cracking comprises cracking at least part of a remaining ammonia feed stream and producing hydrogen and nitrogen, the heat necessary for this endothermic reaction being provided by the exothermic reaction.

In particular, the combustion reaction is :

$$2\ NH3 + 3/2\ O2 \rightarrow N2 + 3\ H20.$$

In particular, the endothermic reaction of ammonia cracking is : $2\ NH3 \rightleftharpoons N2 + 3\ H2$.

The exothermic reaction and the endothermic reaction of ammonia cracking are performed in a single envelope comprised in the ammonia cracking reactor. In one example, the chemical autothermal reaction of ammonia cracking inside the envelope is :

$$4\ NH3 + 3/2\ O2 \rightarrow 2\ N2 + 3\ H20 + 3H2$$

The heat produced by the exothermic partial oxidation reaction is sufficient to allow the endothermic cracking of the ammonia. The autothermal cracking reaction thus doesn't require any external heat source.

The process comprises a step of storing the oxygen product stream in an oxygen buffer, thereby obtaining a stored oxygen product. A continuous supply of the oxidant stream to the ammonia cracking reactor is thus ensured.

The process comprises a step of compressing the oxygen product stream, in particular the stored oxygen product, thereby obtaining a compressed oxygen product stream.

The oxygen product stream from the water electrolysis step is fed directly to the ammonia cracking reactor.

The oxidant stream consists of the oxygen product stream, in particular consists of the stored oxygen product or the compressed oxygen product stream.

Alternatively, the process comprises a step of providing an additional oxidant gas to the combustion reaction. The oxidant stream then comprises at least a portion of the oxygen product stream and the additional oxidant gas.

The additional oxidant gas is for example an oxygen stream or an air stream, for example from the battery limit.

The process comprises a step of preheating the additional oxidant gas in a preheater, upstream the combustion reaction in the additional oxidant gas flow direction.

The step of ammonia cracking of the ammonia feed stream produces a cracked gas product comprising hydrogen, nitrogen, optionally water, and potentially an unconverted portion of ammonia.

The unconverted portion of ammonia is the ammonia that has not been cracked in the ammonia cracking reactor.

The process comprises a cracked gas product cooling step.

The process comprises a step of providing a liquid ammonia feed stream and a step of vaporizing ammonia from said liquid ammonia feed stream, thereby obtaining a vaporized ammonia as said ammonia feed stream.

The process comprises in particular pumping ammonia from said liquid ammonia feed stream.

Optionally, the process comprises a step of superheating the vaporized ammonia, thereby obtaining a superheated ammonia as said ammonia feed stream. The step of vaporizing ammonia and/or super-heating the vaporized ammonia can be performed by exchanging heat with the cracked gas.

The process comprises a hydrogen separation step producing a nitrogen depleted hydrogen product. In particular, the hydrogen separation step comprises separating the cracked gas product into said nitrogen depleted hydrogen product on one side, and a hydrogen separation off gas comprising nitrogen, optionally water, and potentially a remaining unseparated portion of hydrogen on the other side.

The hydrogen separation step is for example performed by Temperature Swing Adsorption (acronym TSA) or by Pressure Swing Adsorption (acronym PSA).

The process comprises a step of purifying the electrolysis hydrogen stream in a hydrogen purification unit, thus producing an electrolysis hydrogen product.

Alternatively, the electrolysis hydrogen stream is routed to the hydrogen separation step.

The step of purifying the electrolysis hydrogen stream comprises the following steps:

- removing a remaining portion of oxygen in the electrolysis hydrogen stream thereby obtaining an oxygen depleted electrolysis hydrogen stream, said step being performed by reacting said remaining portion of oxygen with some of the hydrogen contained in the hydrogen gas product into water,
- drying the oxygen depleted electrolysis hydrogen stream, thus obtaining the electrolysis hydrogen product.

The process comprises a step of mixing the nitrogen depleted hydrogen product from the ammonia cracking reactor with the electrolysis hydrogen product from the electrolyzer to form a hydrogen product stream.

Alternatively, the nitrogen depleted hydrogen product from the ammonia cracking reactor and the electrolysis hydrogen product from the electrolyzer are kept as separated product streams.

Advantageously, the invention thus allows to produce two hydrogen gas product streams with two different purity grades.

For example, the purity of the electrolysis hydrogen product is higher than 99.9%, and the purity of the nitrogen depleted hydrogen product is higher than 90%, preferably higher than 98%.

The process comprises a step of producing a steam stream.

The step of producing a steam stream comprises the following steps:

- providing a secondary water feed stream,
- preheating the secondary water feed stream, thus producing a preheated water feed stream,
- vaporizing the preheated water feed stream, thus producing a water steam stream,
- optionally, superheating the water steam stream to produce a superheated steam stream.

The step(s) of pre-heating, vaporizing and/or superheating the secondary water feed stream can be performed by exchanging heat with the cracked gas.

The secondary water feed stream is a water feed stream that is not directly sent to the electrolyzer.

The process comprises a step of feeding at least a portion of the water steam stream or of the superheated steam stream as said water feed stream to the electrolyzer.

In this embodiment, the water feed stream comprises a portion of the superheated steam stream, potentially in addition with an additional electrolysis water feed.

The use of steam, or of superheated steam, in the water feed stream fed to the electrolyzer allows to perform a high temperature electrolysis, therefore limiting the electricity consumed for the electrolysis step.

Alternatively or in addition, the process comprises:

- a step of feeding a portion of the superheated steam stream to a steam turbine generator,
- a step of producing electricity by flowing said portion of the superheated steam stream through the steam turbine generator.

The process comprises a step of powering the electrolyzer with an external electricity source.

The process comprises a step of powering the electrolyzer with a portion of the electricity produced by the steam turbine generator, potentially in addition with electricity produced by an external electricity source.

The process comprises a step of exporting at least a portion of the electricity produced by the steam turbine generator.

The process comprises a step of combusting a fuel gas in a fired heater, therefore generating heat and generating a flue gas stream.

Said fired heater is external to the ammonia cracking reactor, in particular external to said single reactor vessel or said envelope.

In one alternative to the autothermal reaction of ammonia cracking embodiment, said combustion reaction is performed in said fired heater.

In one embodiment, at least part of the electrolysis hydrogen stream is used as at least part of said fuel gas during a startup phase and/or a shutdown phase, in particular a startup phase and/or a shutdown phase of a plant performing the process.

The fuel gas comprises an ammonia fuel stream provided to the fired heater.

During start-up, hydrogen may be needed as an external source for the fired heater lit off, since off gases are not available yet and pure ammonia combustion is very challenging in a rather cold firebox, both in terms of flame stabilization and pollutant emissions such as ammonia slip and, more importantly, N2O that cannot be captured by selective catalytic reduction (SCR).

During shutdown, a smooth operation has to be guaranteed in order to avoid that below a certain temperature ammonia is still introduced as fuel and may form N2O, so hydrogen from the electrolyzer may be used as smoother for this operational mode.

The step of providing the ammonia fuel stream consist in routing a portion of the ammonia feed stream as said fuel gas.

The process comprises a step of vaporizing the ammonia fuel stream.

The fuel gas comprises any combination of the following streams:

- the ammonia fuel stream,
- a portion of the hydrogen separation off gas,

The process comprises a step of recovering heat from said flue gas stream.
Said recovered heat is used to perform said pre-heating, vaporizing and/or superheating step(s) of the steam stream.
Said recovered heat is used to perform the vaporizing and/or superheating step of the step of providing the ammonia feed stream to the ammonia cracking reactor.
The process comprises a step of controlling the electricity production and consumption, comprising:

- a step of controlling the portion of ammonia feed stream routed as a fuel gas,
- a step of controlling the portion of the electricity produced by the steam turbine used to power the electrolyzer.

It is then possible to adjust over time both the electricity consumed by the electrolysis step, and produced by steam generation.
This control of the electricity consumed and produced allows to compensate for the variations of the external electricity (for example renewable electricity) available over time.
For example, when a high amount of renewable electricity is available:

- the load of the electrolyzer is increased, thus increasing electricity consumption
- the portion of the ammonia feed stream used for steam generation is reduced, thus reducing said internal electricity production. Said internal electricity production is not needed to supplement the renewable electricity.

For example, when renewable electricity is scarce:

- the load of the electrolyzer could be reduced, thus reducing electricity consumption
- the portion of the ammonia feed stream used for steam generation is increased, thus increasing internal electricity production.

The invention also proposes an apparatus arranged for the production of hydrogen from ammonia comprising:

- a water electrolyzer arranged to perform a water electrolysis of a water feed stream, producing an oxygen product stream and an electrolysis hydrogen stream;
- a water feed stream duct arranged to feed said water feed stream to said water electrolyzer,
- an ammonia cracking unit arranged to perform an endothermic reaction of ammonia cracking of an ammonia feed stream
- an ammonia feed stream duct arranged to feed said ammonia feed stream to said ammonia cracking unit
- An oxygen circulation duct fluidically connecting the water electrolyzer and the ammonia cracking unit, and arranged for the circulation of the oxygen product stream from the water electrolyzer to the ammonia cracking unit.

The invention may comprise at least one of the following features, taken independently or in combination:
The ammonia cracking unit is an autothermal cracking unit, arranged to perform both the reaction of ammonia cracking of the ammonia feed stream and a combustion with an oxidant stream comprising the oxygen product stream in a single envelope.
The autothermal cracking unit doesn't require any external heat source.
The apparatus comprises:

- an oxygen buffer arranged for storing the oxygen product stream produced by the water electrolyzer,
- and/or an oxygen compressor arranged for compressing the oxygen product stream produced by the water electrolysis,

The apparatus comprises an additional oxidant gas duct, fluidically connected to the ammonia cracking unit, and arranged to feed an additional oxidant gas to the ammonia cracking unit.
The apparatus comprises an additional oxidant preheater placed on the additional oxidant gas duct and arranged to preheat the additional oxidant gas fed to the ammonia cracking unit.
The apparatus comprises a cracked gas product duct, fluidically connected to the ammonia cracking unit, and arranged for the circulation of a cracked gas product of the endothermic reaction of ammonia cracking.
The apparatus comprises a first series of heat exchangers arranged for cooling the cracked gas product.

Each heat exchanger of the first series of heat exchanger is arranged to cool the cracked gas product.

The cracked gas product duct is arranged to feed the cracked gas product through the heat exchangers of the first series of heat exchangers.

The first series of heat exchanger comprises at least one heat exchanger.

For example, the first series of heat exchangers comprises at least 3 heat exchangers, for example 4 heat exchangers.

One of the heat exchangers is a boiler.

One of the heat exchangers is a steam superheater.

One of the heat exchangers is a water preheater.

One of the heat exchangers is an ammonia vaporizer.

One of the heat exchangers is an ammonia superheater.

One of the heat exchangers is a water cooler.

One of the heat exchangers is an ammonia fuel vaporizer.

The water cooler is arranged to perform a heat transfer step between a chilled water stream and the cracked gas product from the ammonia cracking reactor.

The apparatus comprises an ammonia pump fluidically connected to the ammonia feed stream duct.

The ammonia vaporizer is arranged to vaporize the ammonia feed stream, thus producing a vaporized ammonia feed stream.

The ammonia superheater is arranged to superheat the vaporized ammonia feed stream.

The ammonia feed stream duct is arranged to feed the ammonia feed stream through the ammonia vaporizer, potentially the ammonia superheater, and to feed the vaporized ammonia feed or superheated vaporized ammonia feed stream to the ammonia cracking unit.

The apparatus comprises a hydrogen separation unit fluidically connected to the cracked gas product duct to separate the cracked gas product into a nitrogen depleted hydrogen product on one side, and a hydrogen separation off gas comprising nitrogen, optionally water, and potentially a remaining unseparated portion of hydrogen on the other side.

The apparatus comprises a nitrogen depleted hydrogen product duct connected to the hydrogen separation unit for the circulation of the hydrogen product.

The apparatus comprises a hydrogen separation off gas duct connected to the hydrogen separation unit for the circulation of the hydrogen separation off gas.

The apparatus comprises an electrolysis hydrogen stream duct arranged for the circulation of the electrolysis hydrogen stream.

The hydrogen separation unit is for example a TSA unit configured for performing a Temperature Swing Adsorption, or a PSA unit configured for performing a Pressure Swing Adsorption.

The apparatus comprises a hydrogen purification unit arranged to purify the electrolysis hydrogen stream, and to produce an electrolysis hydrogen product.

The hydrogen purification unit comprises:

- A hydrogen deoxidizer arranged to remove a remaining portion of oxygen in the electrolysis hydrogen stream
- A hydrogen dryer arranged to dry the oxygen depleted electrolysis hydrogen stream.

The apparatus comprises an electrolysis hydrogen product duct arranged for the circulation of the electrolysis hydrogen product.

The electrolysis hydrogen product duct and nitrogen depleted hydrogen product duct are fluidically connected to form a hydrogen product duct stream duct arranged for the circulation of a hydrogen product stream comprising the electrolysis hydrogen product and the purified hydrogen gas product duct.

The apparatus comprises a steam generator arranged for the production of a steam stream.

The steam generator comprises a boiler, optionally a water pre-heater, and potentially a steam superheater.

The water preheater is arranged to preheat a secondary water feed stream and to produce a preheated water feed stream.

The boiler is arranged to vaporize a secondary water feed stream or the preheated water feed stream and to produce a water steam stream.

The steam superheater is arranged to superheat the water steam stream and to produce a superheated water steam stream.

The apparatus comprises a secondary water feed stream duct, arranged for feeding a secondary water feed stream to the steam generator.

The water preheater, the boiler and the steam superheater are part of the first series of heat exchangers.

The water preheater, the boiler and the steam superheater are arranged to each cool the cracked gas product.

The apparatus comprises a steam stream duct arranged for the circulation of the water steam stream or of the

superheated steam stream.

The steam stream duct is connected to the water electrolyzer to feed a portion water steam stream or of the superheated steam stream to the water electrolyzer.

Alternatively or in addition, the apparatus comprises a steam turbine generator arranged to produce electricity from the water steam stream or the superheated steam stream.

The steam stream duct is then arranged for the circulation of at least a portion of the water steam stream or of the superheated steam stream through the steam turbine generator.

The steam turbine generator is electrically connected to the water electrolyzer to provide electricity to the water electrolyzer.

Alternatively or in addition, the steam turbine generator is arranged to export a portion of the electricity produced by the superheated steam stream.

The apparatus comprises an external electricity source arranged to power the electrolyzer.

The apparatus comprises:

- A fired heater comprising a burner arranged to combust a fuel gas, therefore generating heat and producing a flue gas stream,
- A fuel gas duct arranged to feed said fuel gas to the burner of the fired heater,
- A flue gas stream duct arranged to exhaust the flue gas stream produced by the fired heater.

The apparatus comprises:

- an ammonia fuel stream duct connected to the ammonia feed stream duct for feeding a portion of the ammonia feed stream, called the ammonia fuel stream, to the burner of the fired heater and/or
- an ammonia fuel vaporizer arranged to vaporize the ammonia fuel stream fed to the burner.

In one alternative to the autothermal cracking unit embodiment, the fired heater is comprised in the ammonia cracking unit and is configured to provide heat to the reaction of ammonia cracking.

The ammonia cracking unit comprises an ammonia cracking reactor arranged to perform an endothermic reaction of ammonia cracking of the ammonia feed stream, and the fired heater arranged to provide heat to said reaction of ammonia cracking.

In one embodiment, the fuel gas duct is connected to the water electrolyzer to provide at least part of the electrolysis hydrogen stream as a fuel stream to the burner of the fired heater.

The burner can be fluidically connected to any combination of:

- the ammonia fuel stream duct,
- a combustion air stream duct arranged for the circulation of a combustion air stream,
- the hydrogen separation off gas duct.

The apparatus comprises a second series of heat exchangers, arranged to recover heat from the exhausted flue gas stream.

Each of the heat exchanger of the second series of heat exchangers is arranged to recover at least part of the heat from the flue gas stream.

The flue gas stream duct is arranged to feed the flue gas stream from the fired heater through the secondary heat exchanger series.

In an embodiment, the ammonia vaporizer arranged to vaporized the ammonia feed stream is arranged in thermal communication with the fired heater.

The fired heater is then arranged to provide heat to the ammonia vaporizer by the combustion of the fuel gas, therefore vaporizing the ammonia feed stream.

The boiler is arranged in thermal communication with the fired heater.

The fired heater is arranged to provide heat to the boiler by the combustion of the fuel gas, therefore vaporizing the preheated water feed stream.

In a first embodiment, the water preheater and the steam superheater are part of the secondary heat exchanger series, and arranged to perform a heat transfer step of the step of recovering heat from said exhausted flue gas stream.

Further features, details and advantages of the invention will become more clearly apparent from reading the description given below by way of indication with reference to the drawings, in which:

[Fig 1] is a schematic view of the process according to a first embodiment of the invention,

[Fig. 2] is a schematic view of the process according to a second embodiment of the invention,

[Fig. 3] is a schematic view of the apparatus according to a first embodiment of the invention,

[Fig. 4] is a schematic view of the apparatus according to a second embodiment of the invention,

[Fig. 5] is a schematic view of the apparatus according to a third embodiment of the invention,

[Fig. 6] is a schematic view of the apparatus according to a fourth embodiment of the invention.

Figure 1 is a schematic view of the process for the production of hydrogen from ammonia
The process 100 comprises the following steps:

- providing a water feed stream to a water electrolyzer 101,
- performing a water electrolysis of the water feed stream in the electrolyzer 102, producing an oxygen product stream and an electrolysis hydrogen stream;
- providing an ammonia feed stream to an ammonia cracking reactor 103,
- providing an oxidant stream 105 and performing a combustion reaction with said oxidant stream 106, thereby generating heat;
- in the ammonia cracking reactor, performing an endothermic reaction of ammonia cracking 104 of the ammonia feed stream with said generated heat;

The oxidant stream provided 105 for the combustion reaction 106 comprises at least a portion of the oxygen product stream produced by the water electrolysis 102 of the water feed stream.
The oxidant stream 105 is provided at a pressure of up to 30 bar, preferably up to 10 bar or is provided substantially at atmospheric pressure.
The oxidant stream 105 comprises substantially pure oxygen. This enables a more energy efficient process and to downsize the , as less inert gas is provided to the combustion reaction 106.
The reaction of ammonia cracking 104 is part of an autothermal reaction of ammonia cracking 107, meaning that the combustion reaction 106 and the endothermic reaction of ammonia cracking 103 are performed in the ammonia cracking reactor. The chemical autothermal reaction of ammonia cracking 107 is for example, considering an equivalence ratio of $\lambda = 0.5$:

$$NH3 + 3/2\ O2 \text{->} 2\ N2 + 3\ H20 + 3H2$$

The combustion reaction 106 comprises an exothermic reaction of partial oxidation of ammonia consuming part of the ammonia feed stream and the oxidant stream, thereby producing nitrogen, water and heat:

$$2\ NH3 + 3/2\ O2 \rightarrow N2 + 3\ H2O$$

and the endothermic reaction of ammonia cracking 104 comprises cracking at least part of a remaining ammonia feed stream and producing hydrogen and nitrogen:

$$2\ NH3 \rightleftharpoons N2 + 3\ H2$$

the heat necessary for this endothermic reaction being provided by the combustion reaction 106.
The heat produced by the combustion reaction 106 is sufficient to allow the endothermic cracking of the ammonia 104. The autothermal cracking reaction 107 thus doesn't require any external heat source.
The process comprises a step of powering the electrolyzer with an external electricity source 140.
The process 100 comprises a step of storing the oxygen product stream in an oxygen buffer 108, and a step of compressing the oxygen product stream 109, thereby ensuring a continuous supply of a compressed oxidant stream to the autothermal cracking reaction 107.
The process 100 comprises a step of providing an additional oxidant gas to the combustion reaction 110, and a step of preheating the additional oxidant gas in a preheater 111 upstream the combustion reaction in the additional oxidant gas flow direction.
The oxidant stream then comprises at least a portion of the oxygen product stream and the additional oxidant gas.
The additional oxidant gas is for example an oxygen stream or an air stream, for example from the battery limit,

and the oxidant stream comprises at least a portion of the oxygen product stream and the additional oxidant gas.

The ammonia cracking reaction produces a cracked gas product comprising hydrogen, nitrogen, optionally water, and an unconverted portion of ammonia that has not been cracked in the ammonia cracking reactor.

The process 100 comprises the following steps:

- providing a liquid ammonia feed stream 116
- vaporizing ammonia from said liquid ammonia feed stream 117 by exchanging heat with the cracked gas,
- superheating the vaporized ammonia 118 by exchanging heat with the cracked gas, thereby obtaining a super-heated ammonia as said ammonia feed stream.

The process comprises a cracked gas product cooling step 115, comprising a succession of heat transfer step 130a, 130b, 130c performed by feeding the cracked gas product to a first series of heat exchangers placed in series. The heat transfer steps are for example transferring heat to the liquid ammonia feed stream 130a, to the vaporized ammonia 118, or to a chilled water supply 130c.

The process comprises a hydrogen separation step 120 separating the cracked gas product into a nitrogen depleted hydrogen product on one side, and a hydrogen separation off gas comprising nitrogen, water, and a remaining unseparated portion of hydrogen on the other side.

The hydrogen separation step 120 is for example performed by Temperature Swing Adsorption (acronym TSA) or by Pressure Swing Adsorption (acronym PSA).

The process 100 comprises a step of purifying the electrolysis hydrogen stream 121 in a hydrogen purification unit, comprising the following steps:

- removing a remaining portion of oxygen in the electrolysis hydrogen stream 122 by reacting said remaining portion of oxygen with some of the hydrogen contained in the hydrogen gas product into water, thereby obtaining an oxygen depleted electrolysis hydrogen stream,
- drying the oxygen depleted electrolysis hydrogen stream 123, thus obtaining an electrolysis hydrogen product.

Alternatively, in an embodiment not represented, the electrolysis hydrogen stream is routed to the hydrogen separation step.

The process 100 comprises a step of mixing the nitrogen depleted hydrogen product from the ammonia cracking reactor with the electrolysis hydrogen product from the electrolyzer 124 to form a hydrogen product stream.

In another embodiment not represented, the nitrogen depleted hydrogen product from the ammonia cracking reactor and the electrolysis hydrogen product from the electrolyzer are kept as separated product streams, thus allowing to produce two hydrogen gas product streams with two different purity grades.

The hydrogen produced by the electrolysis is advantageously readily available during a startup phase of the plant, during which the hydrogen produced from ammonia cracking is at least not fully available.

Figure 2 is a schematic view of the process 100 for the production of hydrogen from ammonia where the process comprises a step of producing a steam stream 155.

The step of producing a steam stream 155 comprises the following steps:

- providing a secondary water feed stream 150,
- preheating the secondary water feed stream 151,
- vaporizing the preheated water feed stream 152, thus producing a water steam stream, superheating the water steam stream 153 to produce a superheated steam stream at a temperature higher than its vaporization point at the absolute pressure where the temperature is measured.

The steps of pre-heating 151, vaporizing 152 and superheating 153 the secondary water feed stream are performed by exchanging heat with the cracked gas.

The secondary water feed stream is a water feed stream that is not directly sent to the electrolyzer.

The process 100 comprises a step of feeding at least a portion of the superheated steam stream as said water feed stream to the electrolyzer 101. The water feed stream then comprises a portion of the superheated steam stream, potentially in addition with an additional electrolysis water feed, and the water electrolysis 102 is then a high temperature electrolysis.

Performing a high temperature electrolysis advantageously limits the electricity consumed for the electrolysis step.

The process 100 comprises the following steps:

- feeding a portion of the superheated steam stream to a steam turbine generator 160,

- producing electricity by flowing said portion of the superheated steam stream through the steam turbine generator 161.
- powering the electrolyzer with a portion of the electricity produced by the steam turbine generator 162, potentially in addition with electricity produced by an external electricity source,
- exporting at least a portion of the electricity produced by the steam turbine generator 163.

Figure 3 is a schematic view of the process 100 for the production of hydrogen from ammonia in where the process comprises a step of combusting a fuel gas in a 173.

The process comprises the following steps:

- providing an ammonia fuel stream 170, consisting in routing a portion of the ammonia feed stream as said fuel gas.
- vaporizing the ammonia fuel stream 171.
- in a fired heater, combusting 172 a fuel gas comprising the ammonia fuel stream and a portion of the hydrogen separation off gas, therefore generating heat and generating a flue gas stream.
- recovering heat from said flue gas stream.

Said recovered heat is used to perform said pre-heating 151, vaporizing 152 and superheating 153 steps of the steam stream production step.

In an embodiment not represented, said recovered heat is used to perform the step of vaporizing ammonia from the liquid ammonia feed stream 117 and/or the step of superheating the vaporized ammonia feed stream 118. Said steps of vaporizing and/or superheating the ammonia feed stream are then performed in an ammonia vaporizer, arranged in thermal communication with the fired heater.

Alternatively, the steps of vaporizing the ammonia feed stream 117, superheating the vaporized ammonia feed stream 118, preheating the secondary water feed stream 151, vaporizing the preheated water feed stream 152 and superheating the water steam stream 153 can all be performed:

- in a heat transfer step inside the fired heater, the heat being provided by the combustion 172 of the fuel gas,
- in a heat transfer step 130a, 130b, 130c, 130d, 130e, 130f, of the cracked gas product cooling step 115, the heat being provided by the cracked gas product,
- in a heat transfer step of the step of recovering heat from the exhausted flue gas stream 173, the heat being provided by said flue gas stream,
- in any combination of the said heat transfer steps in the fired heater, with the flue gas stream or with the cracked gas product.

The process 100 comprises a step of controlling the electricity production and consumption 180, comprising:

- a step of controlling the portion of ammonia feed stream routed as a fuel gas 181,
- a step of controlling the portion of the electricity produced by the steam turbine used to power the electrolyzer 182.

It is then possible to adjust over time both the electricity consumed by the electrolysis step, and produced by steam generation.

This control of the electricity consumed and produced 180 allows to compensate for the variations of the external electricity (for example renewable electricity) available over time.

For example, when a high amount of renewable electricity is available:

- the load of the electrolyzer is increased, thus increasing electricity consumption
- the portion of the ammonia feed stream used for steam generation is reduced, thus reducing said internal electricity production. Said internal electricity production is not needed to supplement the renewable electricity.

For example, when renewable electricity is scarce:

- the load of the electrolyzer could be reduced, thus reducing electricity consumption
- the portion of the ammonia feed stream used for steam generation is increased, thus increasing internal electricity production.

Figure 4 is a schematic view of the apparatus 1 arranged for the production of hydrogen from ammonia.

The apparatus 1 comprises:

- a water electrolyzer 2 arranged to perform a water electrolysis of a water feed stream, producing an oxygen product stream and an electrolysis hydrogen stream;
- a water feed stream duct 3 arranged to feed said water feed stream to said water electrolyzer 2,
- an ammonia cracking unit 4 arranged to perform an endothermic reaction of ammonia cracking of an ammonia feed stream,
- an ammonia feed stream duct 9 arranged to feed said ammonia feed stream to said ammonia cracking unit
- An oxygen circulation duct 6 fluidically connecting the water electrolyzer 2 to the ammonia cracking unit 4, and arranged for the circulation of the oxygen product stream from the water electrolyzer to the ammonia cracking unit.

The ammonia cracking unit 4 is an autothermal cracking unit arranged to perform both the reaction of ammonia cracking of the ammonia feed stream and a combustion with an oxidant stream comprising the oxygen product stream in a single envelope.

The autothermal cracking unit 4 thus doesn't require any external heat source.

The apparatus 1 comprises:

- an oxygen buffer 7 arranged for storing the oxygen product stream produced by the water electrolyzer,
- an oxygen compressor 8 arranged for compressing the oxygen product stream produced by the water electrolysis.

The apparatus comprises an additional oxidant gas duct 6, fluidically connected to the ammonia cracking unit 4 and arranged to feed an additional oxidant gas to the ammonia cracking unit.

The apparatus comprises an additional oxidant preheater 10 placed on the additional oxidant gas duct 9 and arranged to preheat the additional oxidant gas fed to the ammonia cracking unit.

The apparatus comprises a cracked gas product duct 15, fluidically connected to the ammonia cracking unit 4 and arranged for the circulation of the cracked gas product through a first series of heat exchangers 16 arranged for cooling cracked gas product.

Each heat exchanger 16a, 16b, 16c, 16d, 16e, 16f of the first series of heat exchanger 16 is arranged to perform a heat transfer step extracting heat from the cracked gas product.

The first series of heat exchangers comprises an ammonia vaporizer 16b, an ammonia superheater 16a and a water cooler 16c.

The water cooler 16c is arranged to perform a heat transfer step between a chilled water stream and the cracked gas product from the ammonia cracking unit 4.

The apparatus 1 comprises an ammonia pump 20 fluidically connected to the ammonia feed stream duct.

The ammonia vaporizer 16b and the ammonia superheater 16a are arranged to respectively vaporize and to superheat the vaporized ammonia feed stream, thus producing a superheated vaporized ammonia feed stream.

The ammonia feed stream duct 5 is arranged to feed the ammonia feed stream through the ammonia vaporizer 16b and through the ammonia superheater 16a and to feed the vaporized ammonia or superheated vaporized ammonia feed stream to the ammonia cracking unit 4.

The apparatus 1 comprises a hydrogen separation unit 21 fluidically connected to the cracked gas product duct and arranged to separate the cracked gas product into a nitrogen depleted hydrogen product on one side, and a hydrogen separation off gas on the other side.

The hydrogen separation unit 21 is for example a TSA unit configured for performing a Temperature Swing Adsorption, or a PSA unit configured for performing a Pressure Swing Adsorption.

The apparatus 1 comprises a nitrogen depleted hydrogen product duct 22 connected to the hydrogen separation unit and arranged for the circulation of the hydrogen product, and a hydrogen separation off gas duct 23 connected to the hydrogen separation unit and arranged for the circulation of the hydrogen separation off gas.

The apparatus 1 comprises an electrolysis hydrogen stream duct 25 arranged for the circulation of the electrolysis hydrogen stream.

The apparatus 1 comprises an electrolysis hydrogen stream duct 25 arranged for the circulation of the electrolysis hydrogen stream to a hydrogen purification unit 26 arranged to purify the electrolysis hydrogen stream, and to produce an electrolysis hydrogen product.

The hydrogen purification unit 26 comprises :

- a hydrogen deoxidizer 27 arranged to remove the remaining portion of oxygen in electrolysis hydrogen stream,
- a hydrogen dryer 28 arranged to dry the oxygen depleted electrolysis hydrogen stream.

The apparatus comprises an electrolysis hydrogen product duct 30 arranged for the circulation of the electrolysis hydrogen product, and connected to the nitrogen depleted hydrogen product duct 22 to form a hydrogen product duct stream duct 31 arranged for the circulation of a hydrogen product stream comprising the electrolysis hydrogen product and

the purified hydrogen gas product duct.

Figure 5 is a schematic view of the apparatus 1 arranged for the production of hydrogen from ammonia where the apparatus comprises a steam generator 40 arranged for the production of a steam stream.

The steam generator 40 comprises:

- a water pre-heater 16f arranged to preheat a secondary water feed stream and to produce a preheated water feed stream,
- a boiler 16e arranged to vaporize a secondary water feed stream or the preheated water feed stream and to produce a water steam stream,
- a steam superheater 16d arranged to superheat the water steam stream and to produce a superheated water steam stream.

The water preheater 16f, the boiler 16e and the steam superheater 16d are part of the first series of heat exchangers 16 and are arranged to each perform a heat transfer step of a cracked gas product cooling step, therefore cooling the cracked gas and producing a superheated steam stream from the secondary water feed stream.

The apparatus 1 comprises a secondary water feed stream duct 41, arranged for the feeding a secondary water feed stream to the steam generator 40.

The apparatus 1 comprises a steam stream duct 42 arranged for the circulation of the water steam stream or of the superheated steam stream.

The steam stream duct 42 connected to the water electrolyzer and is arranged to feed a portion of the water steam stream or of the superheated steam stream to the water electrolyzer 2.

The steam stream duct 42 is also arranged for the circulation of a portion of the superheated steam stream through a steam turbine generator 43 to produce electricity from the water steam stream or the superheated steam stream.

The apparatus 1 comprises an external electricity 45 source arranged to power the electrolyzer.

The steam turbine generator 43 is electrically connected to the water electrolyzer and arranged to provide electricity to the water electrolyzer 2, and/or to export a portion of the electricity produced by the superheated steam stream.

Figure 6 is a schematic view of the apparatus 1 arranged for the production of hydrogen from ammonia where the apparatus comprises a fired heater 50 comprising a burner 51 arranged to combust a fuel gas, therefore generating heat and producing a flue gas stream.

The apparatus 1 comprises:

- a fuel gas duct 52 arranged to feed said fuel gas to the burner of the fired heater,
- a flue gas stream duct 53 arranged to exhaust the flue gas stream produced by the fired heater.

The apparatus 1 comprises :

- an ammonia fuel stream duct 54 connected to the ammonia feed stream duct for feeding a portion of the ammonia feed stream, called the ammonia fuel stream, to the burner 51 of the fired heater 50,
- an ammonia fuel vaporizer 55 arranged to vaporize the ammonia fuel stream fed to the burner 51 in the direction of the ammonia fuel stream.

The burner 51 is fluidically connected to:

- the ammonia fuel stream duct 54,
- a combustion air stream duct 56 arranged for the circulation of a combustion air stream,
- the hydrogen separation off gas duct 23.

The apparatus comprises a second series of heat exchangers 60, arranged to recover heat from the exhausted flue gas stream.

The flue gas stream duct 53 is arranged to feed the flue gas stream from the fired heater through the secondary heat exchanger series 60, each of the heat exchanger 60a, 60b, 60c of the second series of heat exchangers being arranged to recover at least part of the heat from the flue gas stream.

In embodiments not represented, the water preheater 16f, the boiler 16e, the steam superheater 16d, the ammonia vaporizer 16b, the ammonia superheater 16a and the ammonia fuel vaporizer 55 can all be placed:

- In thermal communication with the fired heater 50,
- On the flue gas stream duct in the secondary heat exchanger series 60, performing a heat transfer step with the flue

gas stream,

- On the cracked gas product duct in the first heat exchanger series 16, performing a heat transfer step with the cracked gas product.

In an embodiment not represented, the fired heater 50 is comprised in the ammonia cracking unit 4 and is configured to provide heat to the reaction of ammonia cracking. The ammonia cracking unit 4 then comprises an ammonia cracking reactor arranged to perform an endothermic reaction of ammonia cracking of the ammonia feed stream, and the fired heater 50 arranged to provide heat to said reaction of ammonia cracking.

## Claims

1. Process (100) for the production of hydrogen from ammonia comprising the following steps:

   - providing a water feed stream to a water electrolyzer (101);
   - performing a water electrolysis of the water feed stream in the electrolyzer (102), producing an oxygen product stream and an electrolysis hydrogen stream;
   - providing an ammonia feed stream to an ammonia cracking reactor (103);
   - providing an oxidant stream (105) and performing a combustion reaction with said oxidant stream (106), thereby generating heat;
   - in the ammonia cracking reactor, performing an endothermic reaction of ammonia cracking (104) of the ammonia feed stream with said generated heat;

   **characterized in that** the oxidant stream comprises at least a portion of the oxygen product stream produced by the water electrolysis of the water feed stream.

2. Process (100) according to the preceding claim, comprising a step of providing a liquid ammonia feed stream (116) and a step of vaporizing ammonia from said liquid ammonia feed stream (117), thereby obtaining a vaporized ammonia as said ammonia feed stream.

3. Process (100) according to claim 2, comprising a step of superheating the vaporized ammonia (118), thereby obtaining a superheated ammonia as said ammonia feed stream

4. Process (100) according to any of the preceding claims, comprising a step of purifying the electrolysis hydrogen stream (121) in a hydrogen purification unit, thus producing an electrolysis hydrogen product, the step of purifying the electrolysis hydrogen stream comprising the following steps:

   - removing a remaining portion of oxygen in the electrolysis hydrogen stream (122) thereby obtaining an oxygen depleted electrolysis hydrogen stream, said step being performed by reacting said remaining portion of oxygen with some of the hydrogen contained in the hydrogen gas product into water,
   - drying the oxygen depleted electrolysis hydrogen stream (123), thus obtaining the electrolysis hydrogen product.

5. Process (100) according to any of the preceding claims, comprising a step of producing a steam stream (155), comprising the following steps:

   - providing a secondary water feed stream (150),
   - preheating the secondary water feed stream, thus producing a preheated water feed stream (151),
   - vaporizing the preheated water feed stream (152), thus producing a water steam stream,
   - optionally, superheating the water steam stream (153) to produce a superheated steam stream.

6. Process (100) according to claim 5, comprising a step of feeding at least a portion of the water steam stream or of the superheated steam stream as said water feed stream to the electrolyzer (101)

7. Process (100) according to any of the claims 5 and 6, comprising:

   - a step of feeding a portion of the superheated steam stream to a steam turbine generator (160),
   - a step of producing electricity by flowing said portion of the superheated steam stream through the steam turbine

generator (161).

**8.** Process (100) according to any of the preceding claims, comprising a step of combusting a fuel gas in a fired heater (173), thereby generating heat and generating a flue gas stream.

**9.** Process (100) according to claim 8, wherein the fuel gas comprises any combination of the following streams:

- an ammonia fuel stream,
- a portion of a hydrogen separation off gas comprising nitrogen, water, and potentially a remaining unseparated portion of hydrogen.

**10.** Process (100) according to claim 8 or claim 9, wherein said combustion reaction is performed in said fired heater.

**11.** Process (100) according to claim 10, wherein at least part of the electrolysis hydrogen stream is used as at least part of said fuel gas during a startup phase and/or a shutdown phase.

**12.** Process (100) according to any of claims 1 to 9, wherein the reaction of ammonia cracking (104) is part of an autothermal reaction of ammonia cracking (107), in particular, the reaction of ammonia cracking (104) and the combustion reaction (106) are performed in the same reactor vessel.

**13.** Process (100) according to any of the claims 8 to 11 or according to claim 12 in combination with claim 8, comprising a step of recovering heat from said flue gas stream.

**14.** Apparatus (1) arranged for the production of hydrogen from ammonia comprising:

- a water electrolyzer (2) arranged to perform a water electrolysis of a water feed stream, producing an oxygen product stream and an electrolysis hydrogen stream;
- a water feed stream duct (3) arranged to feed said water feed stream to said water electrolyzer,
- an ammonia cracking unit (4) arranged to perform an endothermic reaction of ammonia cracking of an ammonia feed stream,
- an ammonia feed stream duct (9) arranged to feed said ammonia feed stream to said ammonia cracking unit,
- An oxygen circulation duct (6) fluidically connected to the water electrolyzer (2) and to the ammonia cracking unit (4), and arranged for the circulation the oxygen product stream from the water electrolyzer to the ammonia cracking unit (4).

[Fig. 1]

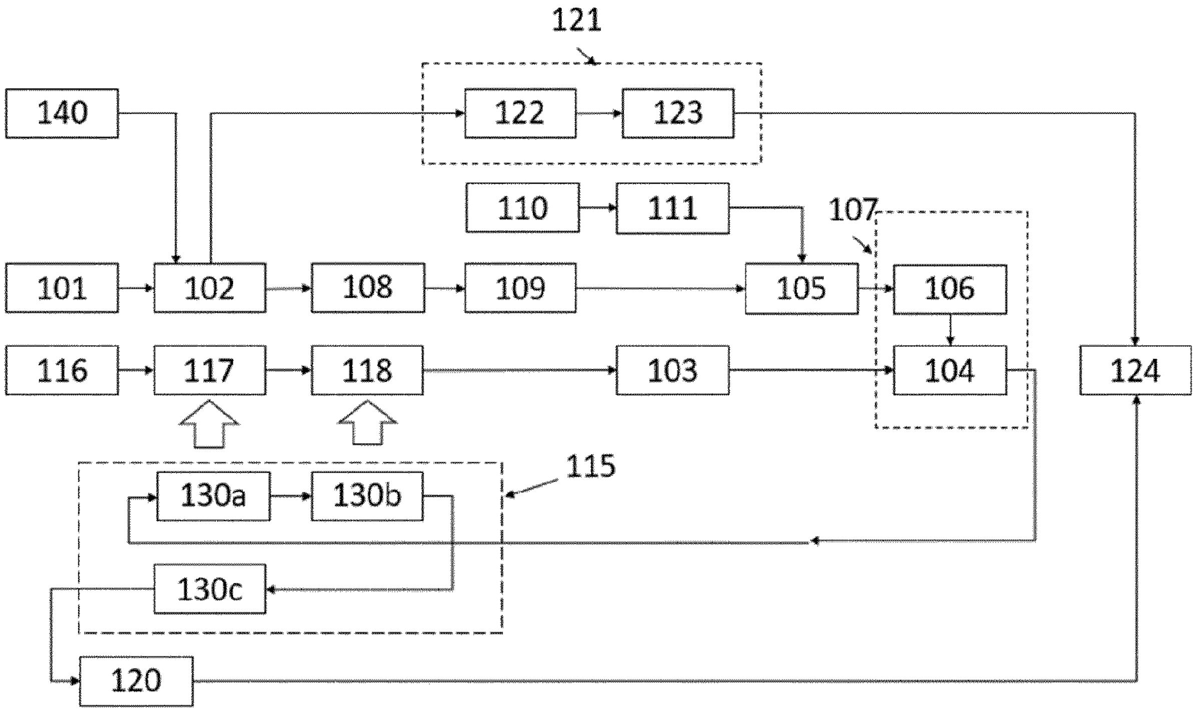
121
140
122
123
110
111
107
101
102
108
109
105
106
116
117
118
103
104
124
115
130a
130b
130c
120

[Fig. 2]

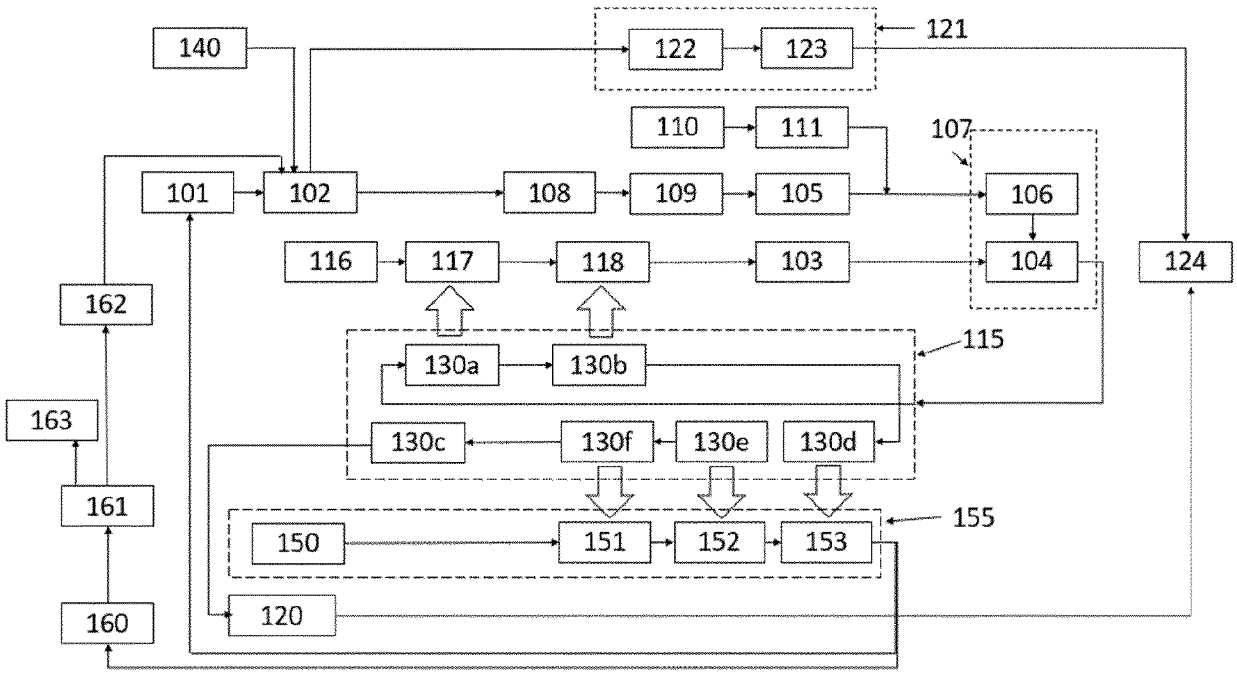
140
122
123
121
110
111
107
101
102
108
109
105
106
116
117
118
103
104
124
162
115
130a
130b
163
130c
130f
130e
130d
161
155
150
151
152
153
120
160

[Fig. 3]

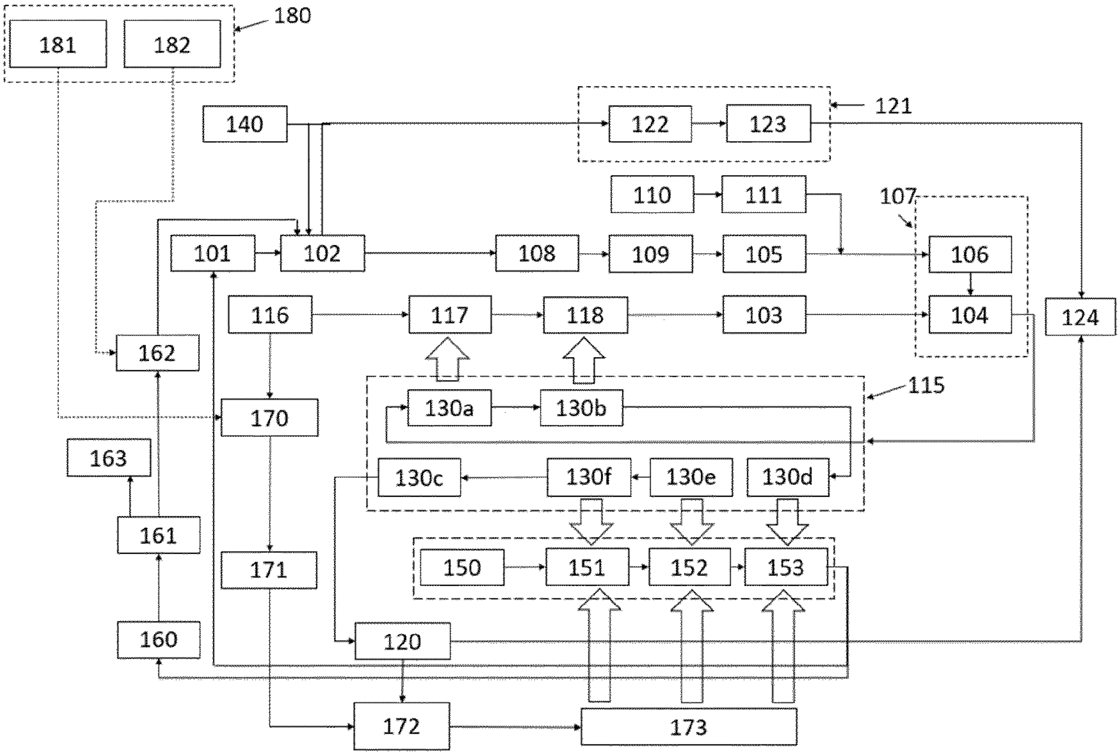
180
181
182
140
122
123
121
110
111
107
101
102
108
109
105
106
116
117
118
103
104
124
162
170
115
130a
130b
163
130c
130f
130e
130d
161
171
150
151
152
153
160
120
172
173

[Fig. 4]

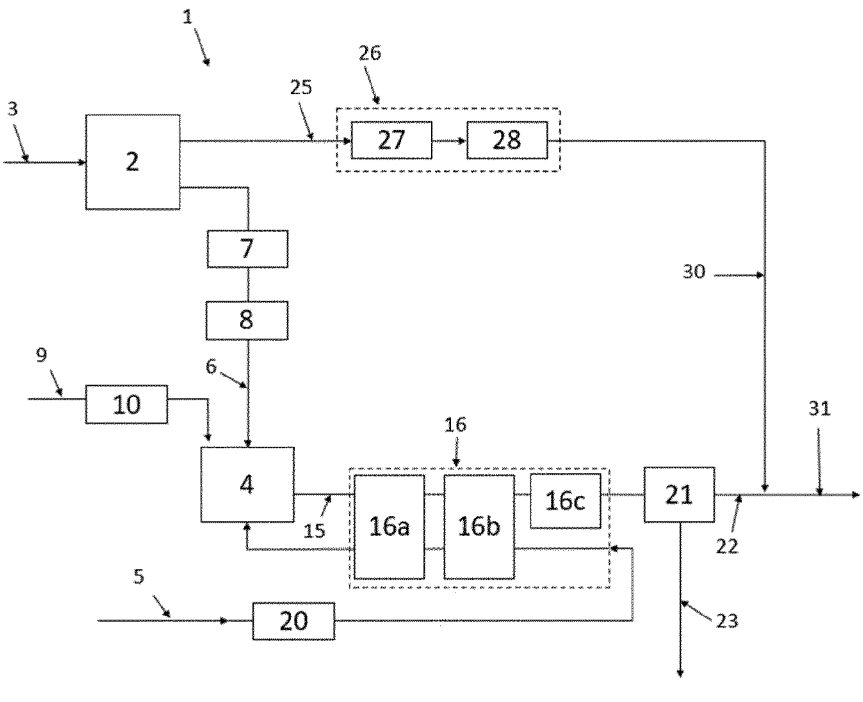
1
26
25
3
2
27
28
7
30
8
9
6
10
16
31
4
16a
16b
16c
21
15
22
5
20
23

[Fig. 5]

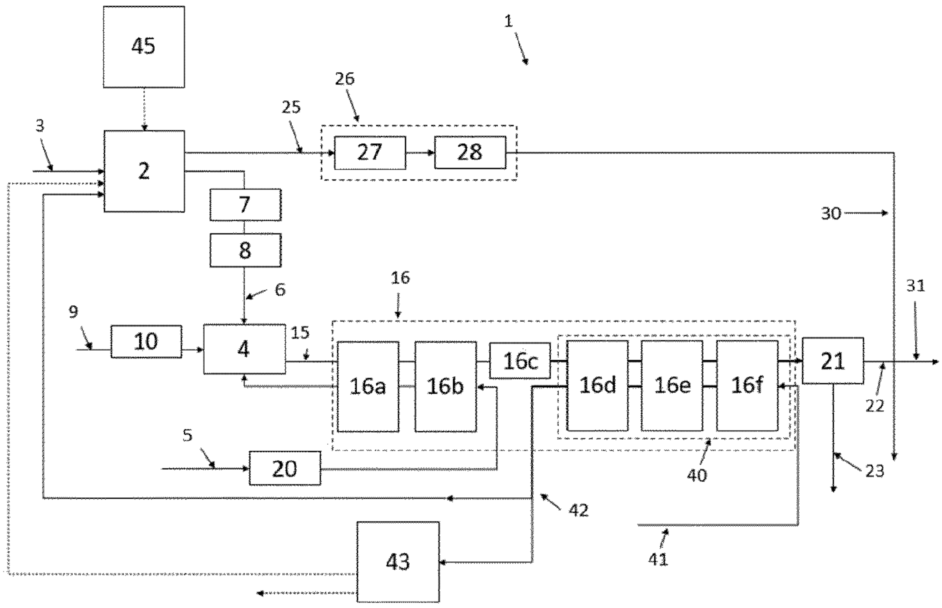
1
45
26
25
3
2
27
28
30
7
8
6
16
31
9
10
4
15
16c
21
16a
16b
16d
16e
16f
22
5
20
40
23
42
43
41

[Fig. 6]

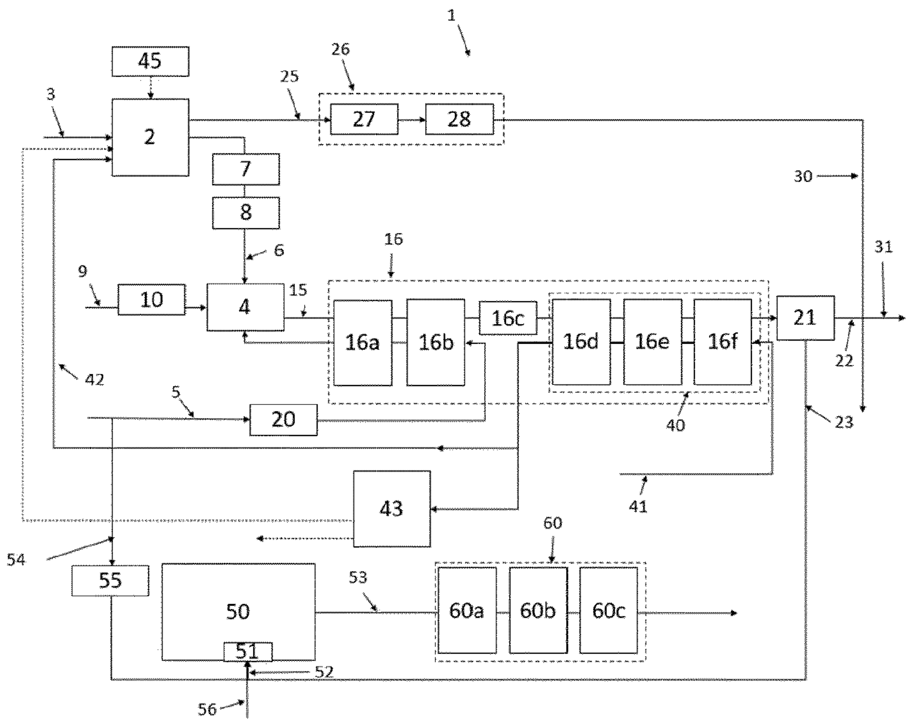
1
45
26
25
3
2
27
28
30
7
8
6
16
31
9
10
4
15
16c
21
16a
16b
16d
16e
16f
22
42
5
20
40
23
41
43
60
54
55
50
53
60a
60b
60c
51
52
56

Europäisches Patentamt
European Patent Office
Office européen des brevets

# EUROPEAN SEARCH REPORT

Application Number
EP 23 21 2540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 4 112 539 A1 (LINDE GMBH [DE])<br>4 January 2023 (2023-01-04)<br>* paragraphs [0014], [0015], [0016], [0029] - [0032], [0038] - [0040]; figure 1 * | 1-6,8-14<br>7 | INV.<br>C01B3/04<br>C25B1/04<br>F01D15/10<br>C25B1/042 |
| X<br>A | EP 4 112 540 A1 (LINDE GMBH [DE])<br>4 January 2023 (2023-01-04)<br>* paragraphs [0020], [0021], [0024], [0030], [0031], [0036] - [0028]; claims 1,5,6,8,9,15 * | 1,2,8,10,12,14<br>3-7,9,11,13 | |
| A | WO 2011/004344 A1 (ACTA SPA [IT]; TAMPUCCI ALESSANDRO [IT]; BERT PAOLO [IT])<br>13 January 2011 (2011-01-13)<br>* page 6, line 8 - page 7, line 7; figure 1 * | 1-14 | |
| | | | TECHNICAL FIELDS SEARCHED (IPC) |
| | | | C01B<br>C25B<br>F01D |

The present search report has been drawn up for all claims

| Place of search | Date of completion of the search | Examiner |
|---|---|---|
| Munich | 14 May 2024 | Werner, Håkan |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 21 2540

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | Publication date | Patent family member(s) | Publication date |
|---|---|---|---|
| EP 4112539 A1 | 04-01-2023 | EP 4112539 A1 | 04-01-2023 |
| | | EP 4363371 A1 | 08-05-2024 |
| | | KR 20240026451 A | 28-02-2024 |
| | | WO 2023274572 A1 | 05-01-2023 |
| EP 4112540 A1 | 04-01-2023 | EP 4112540 A1 | 04-01-2023 |
| | | EP 4363372 A1 | 08-05-2024 |
| | | KR 20240028346 A | 05-03-2024 |
| | | WO 2023274573 A1 | 05-01-2023 |
| WO 2011004344 A1 | 13-01-2011 | NONE | |

EPO FORM P0459

For more details about this annex : see Official Journal of the European Patent Office, No. 12/82